# FASCICULE DE BREVET EUROPEEN

(11) **EP 1 992 535 B1**
(45) Date de publication et mention de la délivrance du brevet: **28.07.2010**
(21) Numéro de dépôt: 08305127.6
(22) Date de dépôt: 25.04.2008
(51) Int. Cl.: B60T 7/10

(54) **Dispositif de commande de frein de stationnement de véhicule automobile**
Steuervorrichtung für Parkbremse eines Kraftfahrzeugs
Device for controlling an automobile parking brake

(30) Priorité: 16.05.2007 FR 0755117
(43) Date de publication de la demande: 19.11.2008
(73) Titulaire: Peugeot Citroën Automobiles SA, 78943 Vélizy-Villacoublay Cedex (FR)
(72) Inventeur: Berthias, Gilles, 91270, Vigneux sur Seine (FR)

(56) Documents cités:
- EP-A- 0 995 652
- FR-A- 2 709 718
- FR-A- 2 761 654

## Description

La présente invention concerne un dispositif de commande d'un frein de stationnement de véhicule automobile comprenant un levier de frein à main comportant une tige montée pivotante autour d'un pivot fixe du véhicule par l'une de ses extrémités et une poignée de préhension montée à l'extrémité libre de la tige.

Il est connu qu'un tel dispositif de commande de frein à main est placé entre le siège conducteur et le siège passager, à l'arrière d'un boîtier de vitesse supportant un levier de vitesse.

De ce fait, l'emplacement prévu pour le dispositif de frein à main est limité, et le levier d'entraînement doit être peu volumineux. Il en résulte en particulier que le levier est réalisé d'une longueur relativement courte pour tenir dans l'espace qui lui est réservé.

Un tel levier présente l'inconvénient qu'il requiert une force importante à cause de sa faible longueur. (Voir par exemple FR 2761654 A1).

Le but de l'invention est de proposer une architecture de dispositif de commande de frein de stationnement capable de remédier à ces inconvénients.

Pour atteindre ce but, le dispositif de commande d'un frein de stationnement de véhicule automobile selon l'invention est caractérisé en ce que la poignée est montée coulissante sur la tige, et en ce que le dispositif comprend un mécanisme apte à faire coulisser ladite poignée par rapport à la tige concomitamment au pivotement de ladite tige autour du pivot fixe.

Selon une autre caractéristique de l'invention, le mécanisme de transformation du mouvement de pivotement en mouvement de coulissement comprend une biellette dont la première extrémité est cinématiquement liée à l'extrémité articulée de la tige, de façon que la rotation de la tige autour du pivot fixe entraîne un mouvement en translation axiale de la biellette.

Selon une autre caractéristique de l'invention, la deuxième extrémité de la biellette est montée à pivot à l'intérieur de la poignée.

Selon une autre caractéristique de l'invention, biellette est articulée à un élément rotatif entraîné en rotation par la tige.

Selon une autre caractéristique de l'invention, l'élément rotatif est entraîné en rotation par la tige au moyen d'un pignon solidaire en rotation de l'extrémité articulée de la tige.

Selon une autre caractéristique de l'invention, l'élément rotatif comporte une partie dentée qui engrène une partie dentée complémentaire du pignon.

Selon une autre caractéristique de l'invention, l'élément rotatif est un pignon en engrènement avec le pignon.

Selon une autre caractéristique de l'invention, l'élément rotatif comporte une excroissance radiale et la biellette est articulée à cette excroissance radiale.

Selon une autre caractéristique de l'invention, la tige du levier est coudée pour que l'axe de la poignée et la tige soient orientées afin d'assurer la coopération de la biellette et de la tige.

Selon une autre caractéristique de l'invention, le dispositif procure une démultiplication de l'effort à fournir par le conducteur qui est variable lors du pivotement du levier et dépend de la disposition relative des pièces constitutives du mécanisme de transformation.

L'invention concerne également un véhicule automobile caractérisé en ce qu'il comporte un dispositif de commande de frein de stationnement tel que défini ci-dessus.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple et dans lesquels :

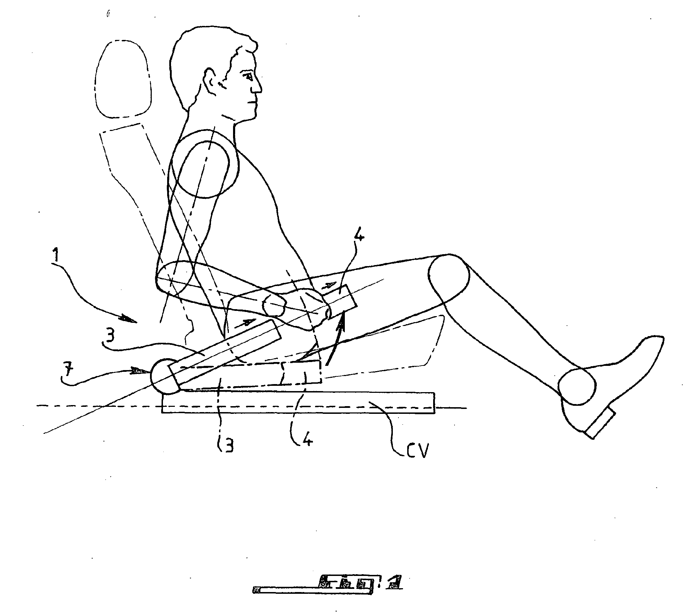

- la figure 1 est une vue schématique d'un dispositif de commande de frein de stationnement selon l'invention, lors de son utilisation par un conducteur du véhicule ;
- la figure 2 est une vue schématique latérale plus détaillée du dispositif similaire à la figure 1 avec le levier dans la position basse ;
- la figure 3 est une vue schématique latérale plus détaillée du dispositif selon la figure 2 avec le levier dans la position haute ; et
- la figure 4 est une vue éclatée en perspective d'une partie du dispositif de commande de frein selon l'invention.

Le dispositif 1 de commande de frein de stationnement selon l'invention comprend un levier 2 de frein à main constitué d'une tige 3 et d'une poignée de préhension 4.

Comme le montrent les figures, la tige 3 est montée pivotante autour d'un pivot fixe 30 de la caisse du véhicule par l'une 5 de ses extrémités, l'axe de pivotement noté AX1 étant sensiblement transversal à la direction longitudinale du véhicule. Ce pivotement a lieu entre une position basse quand le frein est desserré, et une position haute quand le frein est serré. Dans la position basse, l'angle formé entre l'axe de la tige 3 et l'horizontale est minimal, et, dans la position haute, cet angle est maximal, par exemple, de l'ordre de 45°.

La particularité de l'invention réside dans le fait que la poignée de préhension 4 est une pièce, avantageusement tubulaire, montée coulissante sur la partie d'extrémité libre 6 de la tige 3, et qu'un mécanisme 7 assure le glissement de la poignée 4 sur la tige 3 afin de faire varier la longueur du levier 2 de frein à main en fonction de son pivotement. La longueur du levier est minimale quand le frein est desserré et maximale quand le frein est serré.

Selon l'invention, le mécanisme 7 conduit au coulissement de la poignée 4 par rapport à la tige 3 concomitamment au pivotement de la tige 3 autour du pivot fixe 30, et en particulier au coulissement de la poignée 3 dans le sens de son éloignement par rapport au pivot fixe 30 lorsque le frein est en cours de serrage. Ainsi, quand la poignée 4 coulisse le long de la tige 3, la longueur du levier 3 varie ; la longueur du levier correspondant à la distance qui sépare le pivot fixe 30 de l'extrémité libre 10 (ou extrémité avant) de la poignée 4.

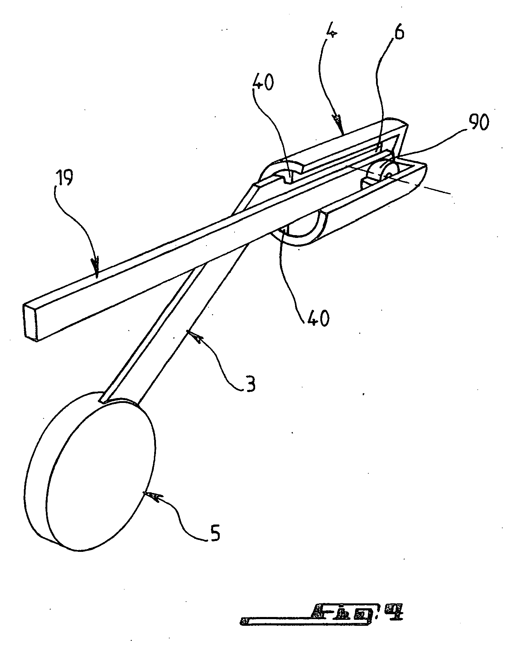

Comme on le voit sur la figure 4, des rails de guidage 40 sont ménagés à l'intérieur de la poignée 4, de sorte que la tige 3 soit montée entre lesdits rails 40 pour que la poignée 4 puisse coulisser par rapport à la tige 3.

La poignée de préhension 4 a son extrémité avant 10 fermée.

Le mécanisme 7 qui permet de faire varier la longueur du levier 2 au cours du pivotement comprend un pignon 12 qui engrène un pignon 13 solidaire en rotation de l'extrémité 5 de la tige 3 et dont le centre est noté A. L'axe de rotation du pignon 13 coïncide avec l'axe AX1 du pivot fixe 30. Ce pignon 13 constitue par exemple l'organe de commande du câble de freinage non représenté sur les figures mais connu en soi.

Le pignon 12, dont le centre est noté B, tourne autour d'un axe AX2 parallèle à l'axe AX1. Cet axe AX2 est fixe et maintenu par une pièce de support 14 lié à la caisse du véhicule.

Le pignon 12 comprend une excroissance radiale 16, en saillie, vers l'extérieur au-delà de la périphérie du pignon. L'extrémité de cette excroissance, notée C, est articulée à l'une 18 des extrémités d'une biellette 19 dont l'autre extrémité 20 est articulée à la poignée 4 en un point noté D. Comme on le voit plus précisément en figure 4, la biellette 19 est montée à l'intérieur de la poignée 4, avec qui elle est liée en translation par rapport à la tige 3. Pour ce faire, la biellette 19 présente un ergot 90 faisant saillie, ledit ergot 90 étant monté dans un logement adéquat formé à l'intérieur de la poignée 4 de sorte que l'extrémité 20 de la biellette 19 est montée à pivot à l'intérieur de la poignée 4.

Dans cette configuration illustrée par la figure 4, la tige 3 et la biellette 19 sont montées côte à côte à l'intérieur de la poignée 4, la poignée 4 et la biellette 19 pouvant coulisser ensemble par rapport à la tige 3.

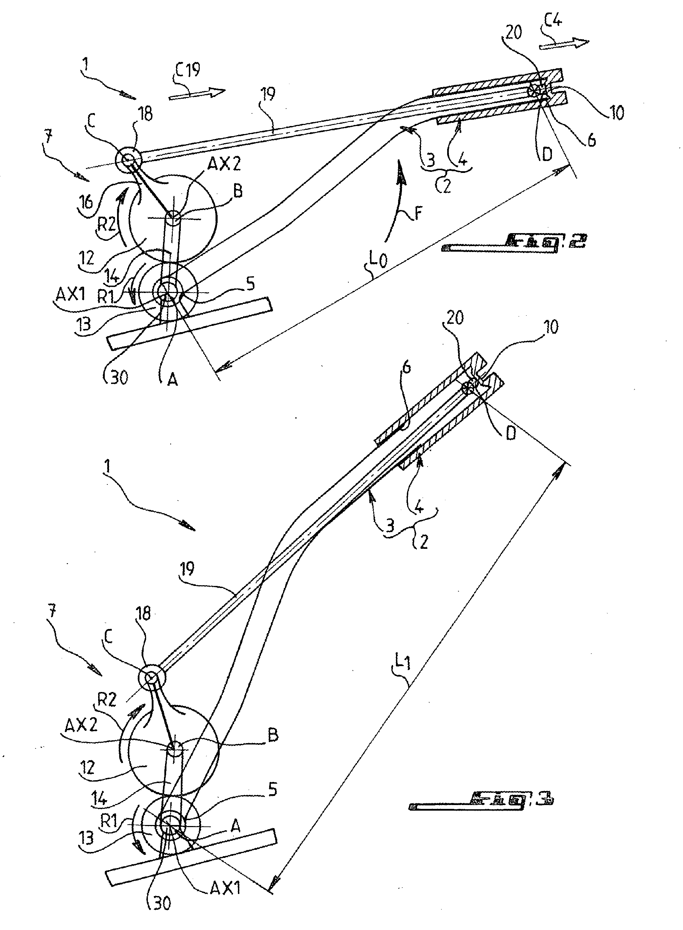

Dans la position basse du levier, la poignée 4 est entièrement emmanchée sur la tige 3 de sorte que l'extrémité libre 6 de la tige 3 est en butée contre l'extrémité avant fermée 10 de la poignée 4, comme illustré à la figure 2. La longueur du levier est alors minimale, et correspond à la longueur L0 de la figure 2. Dans la position haute, la poignée est déplacée axialement vers l'extérieur du dispositif, dans le sens d'un allongement du levier. La longueur du levier est alors maximale, et correspond à la longueur L1 de la figure 3.

La tige 3 est coudée, comme illustré sur les figures 2 et 3, pour que la biellette 19 et l'axe de la poignée 4 soient approximativement parallèles malgré l'écart de l'articulation de la biellette au pignon 12 et l'axe de pivotement AX1 du levier. En outre, la biellette 19 est suffisamment large pour qu'elle puisse débattre angulairement autour du point D à l'intérieur de la poignée 4, entre les deux positions extrêmes du frein à main.

D'autre part, la poignée 4 est sensiblement horizontale quand le frein est desserré, c'est-à-dire en position basse, pour une préhension plus facile.

L'utilisation de ce dispositif 1 de commande de frein de stationnement ressort déjà en partie de la description ci-dessus.

Pour serrer le frein à main, le conducteur saisit la poignée de préhension 4, qu'il tire vers le haut dans le sens de la flèche F. Le pivotement de la poignée 4 consécutif à cet effort entraîne le pivotement de la tige 3 qui provoque la rotation du pignon 13 autour de l'axe AX1 dans le sens anti-horaire, symbolisée par la flèche R1.

La rotation du pignon 13 déclenche la rotation du pignon 12 autour de l'axe AX2 dans le sens horaire, symbolisée par la flèche R2. Alors, puisque l'excroissance 16 est solidaire du pignon 12, son mouvement de rotation R2 pousse la biellette 19 vers la poignée de préhension 4, dans le sens de la double flèche C19, et, par conséquent, la poignée 4, se déplace à son tour, axialement et dans le même sens que la biellette 19. Lors de ce mouvement, la poignée coulisse, dans le sens de la flèche C4, sur la tige 3 dont l'extrémité libre 6 s'éloigne de l'extrémité avant 10 de la poignée 4.

Il en résulte que la longueur totale du levier 2 augmente progressivement lors du serrement du frein jusqu'à atteindre une longueur maximale L1 en position haute.

D'une manière analogue, pour desserrer le frein à main, le conducteur saisit la poignée 4, qu'il pousse vers le bas. Le pivotement du levier 2 entraîne la rotation des pignons 12 et 13, le pignon 13 tournant dans le sens horaire et le pignon 12 dans le sens anti-horaire. Alors, l'excroissance 16 se déplace, et la biellette 19 tire la poignée 4 qui coulisse progressivement sur la tige 3, la recouvrant peu à peu.

Lors du desserrement du frein, la longueur totale du levier diminue donc jusqu'à retrouver sa longueur la plus courte L0 en position basse.

Le mécanisme 7 permet une démultiplication de la force que le conducteur doit fournir.

Le rapport de la démultiplication et la progressivité de l'augmentation de la longueur au cours du serrement du frein dépendent du rapport des diamètres des deux pignons 12 et 13, de la distance entre les centres A et B des pignons, de la distance entre le centre B et l'articulation de la biellette au pignon 12 notée C, de la position angulaire entre l'axe reliant B et C et l'axe reliant A et B, de la distance entre A et D, qui est l'articulation de la biellette à la poignée, et de la longueur de la biellette.

Le dispositif selon l'invention offre une meilleure ergonomie, en particulier en position haute. De plus, le dispositif reste peu encombrant en position basse.

## Revendications

1. Dispositif de commande d'un frein de stationnement de véhicule automobile comprenant un levier (2) de frein à main comportant une tige (3) montée pivotante autour d'un pivot fixe (30) du véhicule par l'une (5) de ses extrémités et une poignée de préhension (4) montée à l'extrémité libre (6) de la tige (3), **caractérisé en ce que** la poignée (4) est montée coulissante sur la tige (3), et **en ce que** le dispositif comprend un mécanisme (7) apte à faire coulisser ladite poignée (4) par rapport à la tige (3) concomitamment au pivotement de ladite tige (3) autour du pivot fixe (30).

2. Dispositif selon la revendication 1, **caractérisé en ce que** le mécanisme (7) de transformation du mouvement de pivotement en mouvement de coulissement comprend une biellette (19) dont la première extrémité (18) est cinématiquement liée à l'extrémité articulée (5) de la tige (3), de façon que la rotation de la tige (3) autour du pivot fixe (30) entraîne un mouvement en translation axiale de la biellette (19).

3. Dispositif selon la revendication 2, **caractérisé en ce que** la deuxième extrémité (20) de la biellette (19) est montée à pivot à l'intérieur de la poignée (4).

4. Dispositif selon la revendication 2 ou 3, **caractérisé en ce que** la biellette (19) est articulée à un élément rotatif (12) entraîné en rotation par la tige (3).

5. Dispositif selon la revendication 4, **caractérisé en ce que** l'élément rotatif (12) est entraîné en rotation par la tige (3) au moyen d'un pignon (13) solidaire en rotation de l'extrémité articulée (5) de la tige (3).

6. Dispositif selon la revendication 5, **caractérisé en ce que** l'élément rotatif (12) comporte une partie dentée qui engrène une partie dentée complémentaire du pignon (13).

7. Dispositif selon la revendication 6, **caractérisé en ce que** l'élément rotatif (12) est un pignon en engrènement avec le pignon (13).

8. Dispositif selon l'une quelconque des revendications 4 à 7, **caractérisé en ce que** l'élément rotatif (12) comporte une excroissance radiale (16) et **en ce que** la biellette (19) est articulée à cette excroissance radiale (16).

9. Dispositif selon l'une des revendications précédentes, **caractérisé en ce que** la tige (3) du levier (2) est coudée pour que l'axe de la poignée (4) et la tige (3) soient orientées afin d'assurer la coopération de la biellette (19) et de la tige (3).

10. Dispositif selon l'une quelconque des revendications précédentes, **caractérisé en ce qu'**il procure une démultiplication de l'effort à fournir par le conducteur qui est variable lors du pivotement du levier (2) et dépend de la disposition relative des pièces constitutives du mécanisme de transformation (7).

11. Véhicule automobile, **caractérisé en ce qu'**il comporte un dispositif (1) de commande de frein de stationnement selon l'une quelconque des revendications 1 à 10.

## Claims

1. Device for controlling a parking brake of an automobile vehicle, comprising a handbrake lever (2) including a rod (3) mounted in a pivoting manner about a fixed pivot (30) of the vehicle by one (5) of its ends and a gripping handle (4) mounted at the free end (6) of the rod (3), **characterized in that** the handle (4) is mounted in a sliding manner on the rod (3), and **in that** the device comprises a mechanism (7) suited to slide the said handle (4) with respect to the rod (3) concomitantly to the pivoting of the said rod (3) about the fixed pivot (30).

2. Device according to Claim 1, **characterized in that** the mechanism (7) for transformation of the pivoting movement into sliding movement comprises a link (19), the first end (18) of which is kinematically linked to the articulated end (5) of the rod (3), such that the rotation of the rod (3) about the fixed pivot (30) gives rise to a movement in axial translation of the link (19).

3. Device according to Claim 2, **characterized in that** the second end (20) of the link (19) is pivotally mounted inside the handle (4).

4. Device according to Claim 2 or 3, **characterized in that** the link (19) is articulated to a rotary element (12) entrained in rotation by the rod (3).

5. Device according to Claim 4, **characterized in that** the rotary element (12) is entrained in rotation by the rod (3) by means of a pinion (13) integral in rotation with the articulated end (5) of the rod (3).

6. Device according to Claim 5, **characterized in that** the rotary element (12) comprises a toothed part which engages a complementary toothed part of the pinion (13).

7. Device according to Claim 6, **characterized in that** the rotary element (12) is a pinion in engagement with the pinion (13).

8. Device according to any one of Claims 4 to 7, **characterized in that** the rotary element (12) comprises a radial excrescence (16) and **in that** the link (19) is articulated to this radial excrescence (16).

9. Device according to one of the preceding claims, **characterized in that** the rod (3) of the lever (2) is bent so that the axis of the handle (4) and the rod (3) are oriented so as to ensure the cooperation of the link (19) and of the rod (3).

10. Device according to any one of the preceding claims, **characterized in that** it obtains a reduction in the force to be supplied by the driver, which is variable on pivoting of the lever (2) and depends on the relative arrangement of the parts constituting the transformation mechanism (7).

11. Automobile vehicle, **characterized in that** it comprises a device (1) for controlling a parking brake according to any one of Claims 1 to 10.

## Patentansprüche

1. Vorrichtung zum Steuern einer Feststellbremse eines Kraftfahrzeugs, die einen Handbremsenhebel (2) aufweist, der einen Schaft (3) aufweist, der um einen stationären Zapfen (30) des Fahrzeugs an einem (5) seiner Enden montiert ist, und einen Greifgriff (4), der an dem freien Ende (6) des Schafts (3) montiert ist, **dadurch gekennzeichnet, dass** der Griff (4) auf dem Schaft (3) gleitend montiert ist und dass die Vorrichtung einen Mechanismus (7) aufweist, der den Griff (4) in Bezug zu dem Schaft (3) gleichzeitig mit dem Schwenken des Schafts (3) um den stationären Zapfen (30) gleiten lassen kann.

2. Vorrichtung nach Anspruch 1, **dadurch gekennzeichnet, dass** der Mechanismus (7) zum Umwandeln der Schwenkbewegung in eine Gleitbewegung einen Schwingarm (19) aufweist, dessen erstes Ende (18) kinematisch mit dem angelenkten Ende (5) des Schafts (3) derart verbunden ist, dass die Drehung des Schafts (3) um den stationären Zapfen (30) eine axiale Verschiebungsbewegung des Schwingarms (19) nach sich zieht.

3. Vorrichtung nach Anspruch 2, **dadurch gekennzeichnet, dass** das zweite Ende (20) des Schwingarms (19) schwenkend in Inneren des Geräts (4) montiert ist.

4. Vorrichtung nach Anspruch 2 oder 3, **dadurch gekennzeichnet, dass** der Schwingarm (19) an einem Drehelement (12) angelenkt ist, das von dem Schaft (3) in Drehung angetrieben ist.

5. Vorrichtung nach Anspruch 4, **dadurch gekennzeichnet, dass** das Drehelement (12) in Drehung von dem Schaft (3) mittels eines Ritzels (13) angetrieben wird, das in Drehung fest mit dem angelenkten Ende (5) des Schafts (3) verbunden ist.

6. Vorrichtung nach Anspruch 5, **dadurch gekennzeichnet, dass** das Drehelement (12) einen gezahnten Teil aufweist, der in einen komplementären gezahnten Teil des Ritzels (13) eingreift.

7. Vorrichtung nach Anspruch 6, **dadurch gekennzeichnet, dass** das Drehelement (12) ein Ritzel im Eingriff mit dem Ritzel (13) ist.

8. Vorrichtung nach einem der Ansprüche 4 bis 7, **dadurch gekennzeichnet, dass** das Drehelement (12) eine radiale Protuberanz (16) aufweist, und dass der Schwingarm (19) an dieser radialen Protuberanz (16) angelenkt ist.

9. Vorrichtung nach einem der vorhergehenden Ansprüche, **dadurch gekennzeichnet, dass** der Schaft (3) des Hebels (2) abgewinkelt ist, damit die Achse des Griffs (4) und der Schaft (3) ausgerichtet sind, um das Zusammenwirken des Schwingarms (19) und des Schafts (3) sicherzustellen.

10. Vorrichtung nach einem der vorhergehenden Ansprüche, **dadurch gekennzeichnet, dass** sie eine Untersetzung der Kraft bietet, die von dem Fahrer zu liefern ist, die beim Schwenken des Hebels (2) variabel ist und von der relativen Anordnung der Teile, die den Umwandelmechanismus (7) bilden, abhängt.

11. Kraftfahrzeug, **dadurch gekennzeichnet, dass** es eine Vorrichtung (1) zum Steuern einer Feststellbremse nach einem der Ansprüche 1 bis 10 aufweist.
